# FASCICULE DE BREVET EUROPEEN

(11) **EP 1 557 753 B1**
(45) Date de publication et mention de la délivrance du brevet: **19.03.2008**
(21) Numéro de dépôt: 05364006.6
(22) Date de dépôt: 17.01.2005
(51) Int. Cl.: G06F 15/78, H03L 7/00

(54) **Microcontrôleur à convertisseur numérique analogique synchronisé**
Mikrocontroller mit synchronisiertem Analog-Digital-Umsetzer
Microcontroller with synchronized digital-analog converter

(30) Priorité: 20.01.2004 FR 0400507
(43) Date de publication de la demande: 27.07.2005
(73) Titulaire: ATMEL NANTES SA, 44306 Nantes Cédex 3 (FR)
(72) Inventeur: Desuche, Jean, 44470 Carquefou (FR); Bouin, Etienne, 44119 Grandchamp des Fontaines (FR)
(74) Mandataire: Bioret, Ludovic

(56) Documents cités:
- US-A- 4 607 310
- US-A- 5 898 303
- US-A- 6 137 240
- US-B1- 6 198 275
- US-B1- 6 564 334

## Description

### 1. Domaine de l'invention

Le domaine de l'invention est celui des composants électroniques, et notamment celui des microcontrôleurs. Plus précisément, l'invention concerne un microcontrôleur comprenant un ou plusieurs convertisseur(s) numérique analogique (CNA) intégré(s).

L'invention peut trouver des applications dans tous les domaines où un processus ou une fonction intégrant un microcontrôleur doit générer une tension analogique variable, notamment en présence de contraintes temporelles importantes.

Ainsi, l'invention trouve par exemple des applications dans les automates industriels, les alimentations, les ballasts, les appareils électroménagers, les dispositifs d'asservissement de position ou encore les moyens de contrôle de moteurs électriques.

### 2. Solutions de l'art antérieur

Un microcontrôleur est généralement composé d'une unité centrale, de mémoires de données et de programmes, et de périphériques. Un périphérique correspond par exemple à une interface de communication, un autre à un temporisateur (en anglais « timer »), encore un autre à un convertisseur analogique numérique (CAN), et, parfois un convertisseur numérique analogique (CNA).

Il existe actuellement peu de microcontrôleurs comprenant un CNA intégré (par exemple la demande de brevet américain n°US6,564,334 décrit, en relation avec la figure 1. un tel microcontrôleur dans lequel est intégré un CNA. périphérique d'une unité centrale et un registre tampon situé entre l'unité centrale et le convertisseur). Par conséquent, lorsqu'on ne dispose pas d'un microcontrôleur avec un CNA intégré, il est nécessaire d'utiliser un CNA externe, piloté par un périphérique, l'interface entre le microcontrôleur et le CNA se faisant par l'intermédiaire de bus série, généralement de type SPI (de l'anglais « Serial Peripheral Interface » pour « interface série ») ou I2C (de l'anglais « Inter Integrated Circuit » pour « liaison de circuits intégrés »), ou directement en parallèle.

Cependant, que le CNA soit intégré au microcontrôleur ou externe, la gestion du temps par l'unité centrale de ce microcontrôleur n'est pas très précise. En effet, ie microcontrôleur gérant généralement du temps réel, le déroulement d'un programme peut être modifié par la prise en compte d'interruptions matérielles ou logicielles, traitées par l'unité centrale de manière asynchrone.

Au niveau du CNA, le début de la conversion est initialisé par l'exécution d'une instruction dans l'unité centrale du microcontrôleur, effectuant une écriture dans un registre tampon.

Pour générer une forme d'onde analogique F(t) sur la sortie du CNA, il faut programmer le convertisseur pour qu'il convertisse à des instants précis tₙ la valeur F(n).

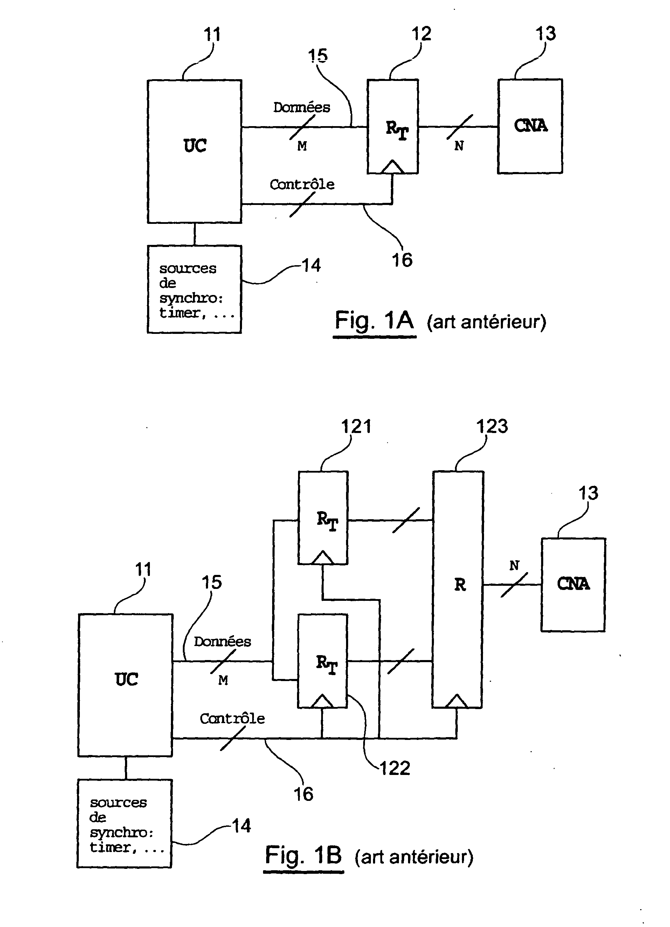

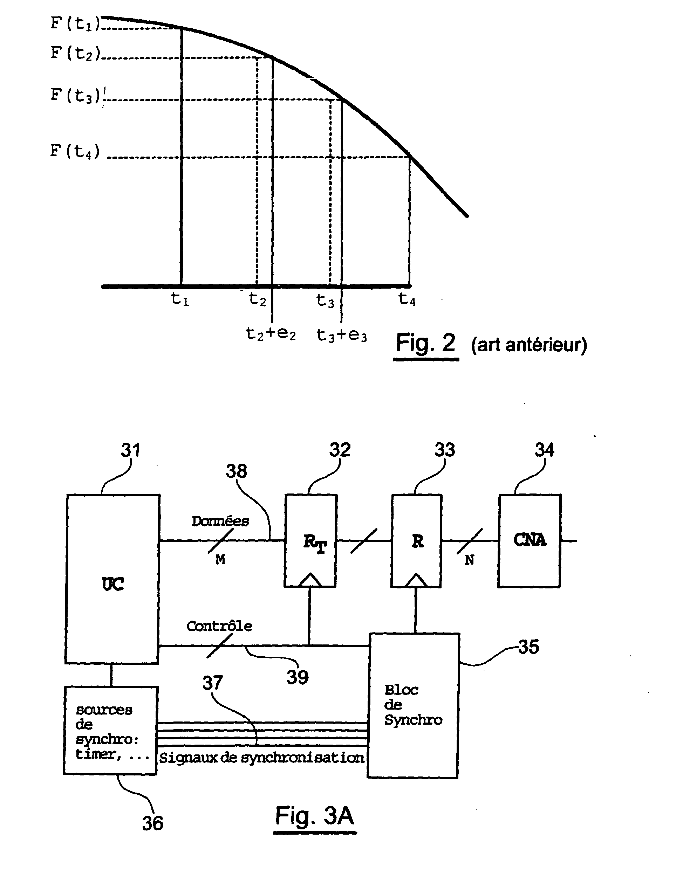

Cette technique est décrite plus en détail par la suite, en relation avec les figures 1A, 1B et 2.

Un inconvénient majeur des systèmes de l'art antérieur présentés est que les conversions ne sont pas effectuées à des instants précis, l'unité centrale déclenchant la conversion au niveau du CNA. En effet, l'unité centrale étant réglée pour traiter les interruptions, elle est conduite à décaler les instructions temps réel.

### 3. Objectifs de l'invention

L'invention a notamment pour objectif de pallier cet inconvénient de l'art antérieur.

Plus précisément, un objectif de l'invention est de fournir une interface de synchronisation permettant d'effectuer une conversion numérique analogique à un instant précis, quelle que soit l'activité interne du microcontrôleur.

Un autre objectif de l'invention est de ne pas nécessiter de moyens externes au microcontrôleur, et donc d'intégrer une telle interface de synchronisation dans un microcontrôleur.

L'invention a encore pour objectif de fournir une telle interface qui soit facile à mettre en oeuvre, tout en restant peu coûteuse.

Encore un autre objectif de l'invention est de permettre d'obtenir une tension analogique variable en fonction du temps et respectant une forme d'onde particulière.

### 4. Caractéristiques essentielles de l'invention

Ces objectifs, ainsi que d'autres qui apparaîtront par la suite, sont atteints à l'aide d'un microcontrôleur comprenant une unité centrale (UC), au moins un convertisseur numérique analogique (CNA), périphérique de ladite unité centrale, et un registre tampon situé entre ladite unité centrale et ledit convertisseur, recevant de ladite unité centrale des données et une première commande de transfert desdites données.

Selon l'invention, un tel microcontrôleur comprend des moyens de synchronisation dudit convertisseur comprenant un registre interposé entre ledit registre tampon et ledit convertisseur, ledit registre interposé recevant une deuxième commande de transfert desdites données indépendante de ladite unité centrale, ladite seconde commande provenant d'un bloc de synchronisation du registre interposé.

Ainsi, l'invention repose sur une approche tout à fait nouvelle et inventive de la génération d'une forme d'onde analogique sur la sortie d'un convertisseur numérique analogique, la synchronisation de la conversion n'étant plus gérée par l'unité centrale, ce qui évite les décalages dus au traitement des interruptions.

Plus précisément, le registre tampon est commandé par l'unité centrale, tandis que le registre interposé entre le registre tampon et le CNA est commandé par une commande de transfert indépendante de l'unité centrale.

De façon préférentielle, la deuxième commande de transfert est une interruption matérielle.

Avantageusement, l'interruption matérielle est générée par au moins un temporisateur (en anglais « timer ») interne au microcontrôleur.

Ainsi le transfert des données entre le registre tampon et le registre interposé entre le CNA et le registre tampon est déclenché par une impulsion émise par le timer, qui gére le temps de façon exacte, et non dépendante des interruptions, et donne des impulsions à des instants précis.

Notamment, l'interruption matérielle peut correspondre à :
- une fin de comptage d'une base de temps ;
- une sortie de comparaison à un temps préprogrammé ;
- un signal externe associé à la capture du temps interne ;
- un signal externe générant une interruption logicielle.

Selon un mode de réalisation avantageux, les moyens de synchronisation comprennent également un bloc de synchronisation du registre alimenté par au moins un signal de synchronisation et la première commande de transfert.

Ces signaux de synchronisation proviennent des sources de synchronisation, notamment des timers.

De manière préférentielle, le convertisseur numérique analogique traitant des mots de N bits, et l'unité centrale délivrant les données sous la forme de mots de M bits, avec M<N, le microcontrôleur comprend des moyens de mise en forme d'un mot de N bits à partir de deux mots de M bits.

Notamment, les moyens de mise en forme comprennent des moyens pour extraire un mot de N bits à partir de deux mots de M bits, en sélectionnant soit les N bits de poids fort, soit les N bits de poids faible.

Selon un mode de réalisation avantageux de l'invention, M=8 et N=10.

Avantageusement, le convertisseur génère une forme d'onde prédéterminée.

De façon préférentielle, le convertisseur délivre un signal analogique à au moins un des éléments appartenant au groupe comprenant :
- les automates industriels ;
- les alimentations ;
- les ballasts ;
- les appareils électroménagers ;
- les dispositifs d'asservissement de position ;
- les moyens de contrôle de moteurs électriques

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B présentent une interface de synchronisation pour un convertisseur numérique analogique intégré dans un microcontrôleur selon l'état de l'art ;
- la figure 2 illustre une forme d'onde analogique en sortie d'un CNA de l'art antérieur tel que celui présenté en figure 1A ;
- les figures 3A et 3B présentent une interface de synchronisation pour un convertisseur numérique analogique intégré dans un microcontrôleur selon l'invention ;
- la figure 4 illustre une forme d'onde analogique en sortie du CNA présenté en figure 3A ;
- la figure 5 présente un exemple de CNA selon un mode de réalisation particulier de l'invention ;
- la figure 6 illustre de manière plus complète un CNA tel que celui présenté en figure 5 ;
- les figures 7A, 7B et 7C présentent les contenus des différents registres d'un CNA tel que celui présenté en figure 6.

### 6. Description d'un mode de réalisation de l'invention

### 6.1. Principe général

Le principe général de l'invention repose sur l'insertion d'un registre entre un registre tampon et un convertisseur numérique analogique, à l'intérieur d'un microcontrôleur, de sorte que le registre tampon soit contrôlé par un signal commandé par l'unité centrale du microcontrôleur et que ledit registre soit contrôlé par un signal indépendant de l'unité centrale.

### 6.2. Technique existante

On présente, en relation avec la figure 1A, le fonctionnement d'un convertisseur numérique analogique (CNA) intégré dans un microcontrôleur selon l'art antérieur, dans le cas où le microcontrôleur délivre des données sous la forme de mots de M bits et le CNA traite des mots de N bits, avec N inférieur ou égal à M.

Un tel microcontrôleur avec un CNA intégré comprend généralement :
- une unité centrale 11 ;
- un registre tampon R_{T} 12 ;
- un convertisseur numérique analogique CNA 13 ;
- des sources de synchronisation 14, par exemple des temporisateurs ;
- des blocs mémoire de données et de programmes (non représentés) ;

Comme précisé précédemment, le début de la conversion au niveau du CNA 13 est initialisé par l'exécution, dans l'unité centrale UC 11 du microcontrôleur, d'une instruction d'écriture à l'adresse de R_{T}. Le registre tampon R_{T} 12 reçoit donc de l'unité centrale 11 des données 15, ainsi qu'une commande de transfert de ces données, notée première commande de transfert 16.

Cependant, le déroulement du programme au sein de l'unité centrale 11 pouvant être modifié par la prise en compte d'interruptions matérielles ou logicielles, certaines instructions vont être retardées : le microcontrôleur ne peut alors pas assurer une synchronisation précise au niveau de la conversion numérique analogique.

On présente en figure 1B une autre situation, dans laquelle le microcontrôleur délivre les données sous la forme de mots de M bits et où le CNA convertit des mots de N bits, avec N supérieur à M.

Dans ce cas, le microcontrôleur présente d'une part les mêmes éléments que décrit en figure 1A, à savoir une unité centrale 11, un registre tampon R_{T}, un convertisseur numérique analogique CNA 13, des sources de synchronisation 14, des blocs mémoire de données et de programmes (non représentés), et d'autre part un registre supplémentaire R 123 de N bits, nécessaire pour assurer l'élargissement du bus de données à N bits.

Dans ce mode de mise en oeuvre, le contenu du registre R_{T} est implémenté sur deux registres R_{T} 121 et R_{T} 122 de taille M. On construit alors dans le registre R 123 un mot de taille N à partir des deux mots de taille M des registres R_{T} 121 et 122.

Comme précisé précédemment, le début de la conversion au niveau du CNA 13 est initialisé par l'exécution, dans l'unité centrale UC 11 du microcontrôleur, d'une instruction d'écriture à l'adresse du registre R 123. Le registre R 123 reçoit donc de l'unité centrale 11 une commande de transfert de ces données, notée première commande de transfert 16.

Ainsi, comme illustré en figure 2, les conversions numériques analogiques ne sont pas effectuées à des instants tᵢ précis (où i est un entier relatif), mais à des instants tᵢ+eᵢ, où eᵢ correspond à un retard dû aux interruptions gérées par l'unité centrale 11. Par conséquent, la forme d'onde analogique F(t) en sortie du CNA est erronée, puisque le CNA ne convertit pas une valeur numérique à un instant tₙ mais à un instant tₙ+eₙ.

### 6.3. Technique de l'invention

### 6.3.1 Cas N≤M

On présente en figure 3A une interface de synchronisation permettant d'éliminer les imprécisions au niveau de la conversion numérique analogique au sein d'un microcontrôleur, selon l'invention, lorsque le microcontrôleur délivre des données sous la forme de mots de M bits et que le CNA convertit des mots de N bits, avec N inférieur ou égal à M.

Le microcontrôleur comprend d'une part les éléments présentés en figure 1A : une unité centrale 31, un registre tampon R_{T} 32, un convertisseur numérique analogique 34, différentes sources de synchronisation 36, des blocs mémoire de données et de programmes, et éventuellement d'autres périphériques.

Selon l'invention, un registre R 33, interposé entre le registre tampon R_{T} 32 et le CNA 34, et un bloc de synchronisation 35 sont d'autre part intégrés au microcontrôleur.

Le but du bloc de synchronisation 35 est d'assurer que la conversion numérique analogique soit effectuée à un instant précis, quelle que soit l'activité interne du microcontrôleur, et particulièrement de son unité centrale 31.

Pour cela, le bloc de synchronisation 35 reçoit en entrée des signaux de synchronisation 37 provenant de l'unité centrale 31 ou des sources de synchronisation 36, et notamment des temporisateurs (de l'anglais « timers »).

Ces signaux 37 sont des interruptions matérielles, qui peuvent correspondre entre autre à :
- une fin de comptage d'une base de temps, qui fournit une interruption périodique ;
- une interruption à un temps préprogrammé (par exemple, une sortie de comparaison) ;
- un signal externe générant une interruption logicielle ;
- un signal externe générant une interruption associé à la capture du temps interne.

L'interface de synchronisation comprend deux registres de conversion :
- le registre R 33, directement relié au CNA 34, dont le contenu numérique correspond à la valeur analogique en sortie du CNA 34 ;
- le registre tampon R_{T} 32 dont le contenu numérique correspond initialement à la valeur analogique future.

Comme pour le système de l'art antérieur décrit en figure 1A, le registre tampon R_{T} 32 reçoit de l'unité centrale 31 des données 38, ainsi qu'une commande de transfert 39 de ces données, notée première commande de transfert 39.

Ensuite, le bloc de synchronisation 35 permet de commander le transfert final des données entre le registre tampon R_{T} 32 et le registre R 33, à l'aide d'une seconde commande de transfert, indépendante de l'unité centrale 31. Ce transfert est en effet effectué lorsqu'une transition dans un signal de synchronisation est détectée.

Dans un mode de réalisation préférentiel de l'invention, le signal de synchronisation provient d'un « timer ». Le transfert des données entre le registre tampon R_{T} 32 et le registre R 33 est alors déclenché par une impulsion, le timer gérant le temps de façon exacte, et non dépendante des interruptions, en donnant des impulsions à des instants précis.

### 6.3.2 Cas N > M

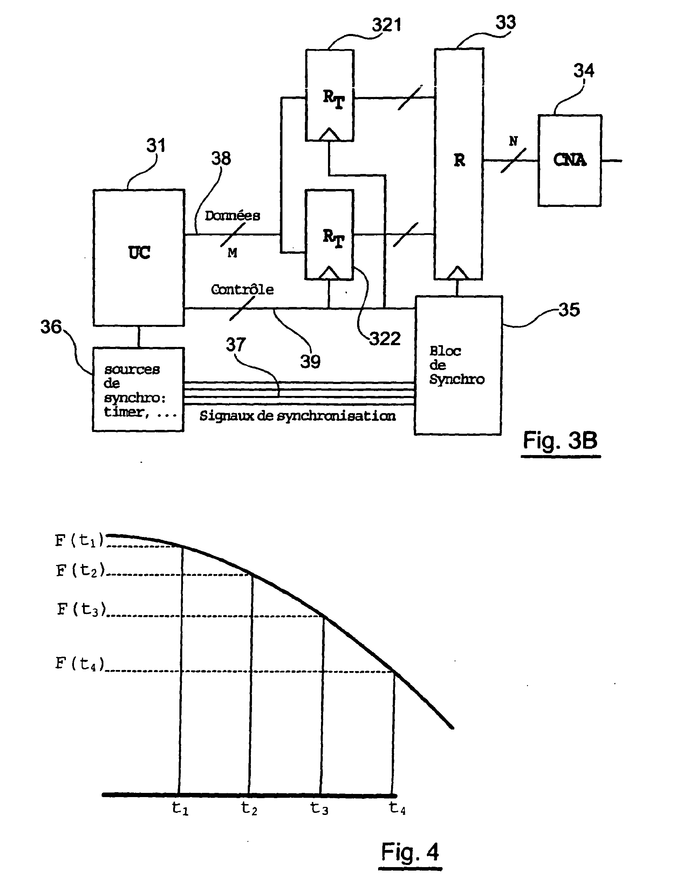

On présente en figure 3B le cas où le microcontrôleur délivre les données sous la forme de mots de M bits et où le CNA traite des mots de N bits, avec N supérieur à M.

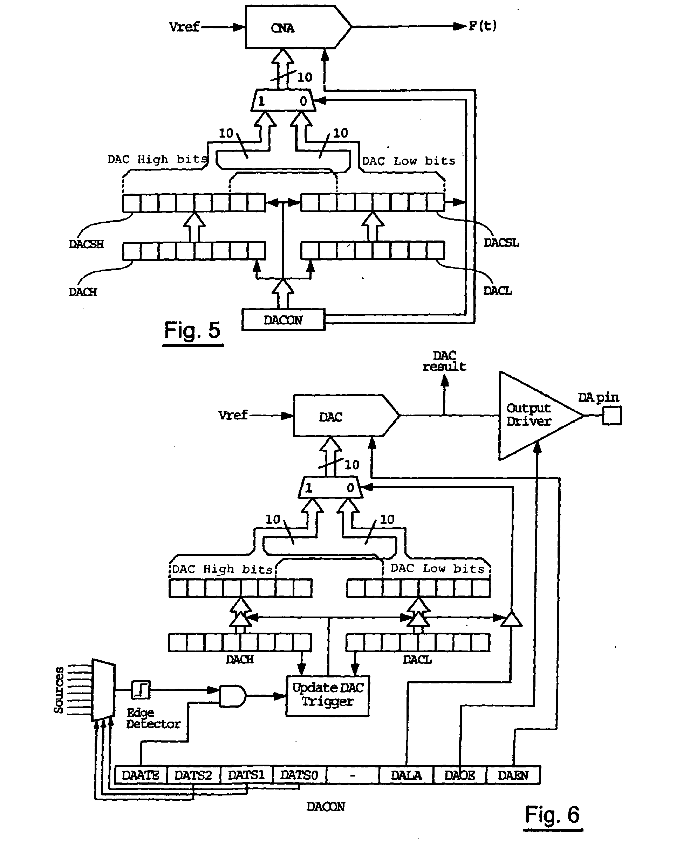

Dans ce cas, le microcontrôleur présente les mêmes éléments que décrit en figure 3A. Néanmoins, dans ce mode de mise en oeuvre, le contenu du registre R_{T}, est implémenté sur deux registres R_{T} 321 et R_{T} 322 de taille M. On construit alors dans le registre R un mot de taille N à partir des deux mots de taille M des registres R_{T} 321 et R_{T} 322. Les moyens de mise en forme d'un mot de N bits à partir de deux mots de M bits sont décrits plus en détail dans la suite, en relation avec la figure 5 (paragraphe 6.3.4).

Comme précisé précédemment, le bloc de synchronisation 35 reçoit en entrée des signaux de synchronisation 37 provenant de l'unité centrale 31 ou des sources de synchronisation 36, et notamment des temporisateurs (de l'anglais « timers »).

Ce bloc de synchronisation 35 permet de commander le transfert final des données entre les registres tampon R_{T} 321 et R_{T} 322, et le registre R 33, à l'aide d'une seconde commande de transfert, indépendante de l'unité centrale 31. Ce transfert est effectué lorsqu'une transition dans un signal de synchronisation est détectée.

### 6.3.3 Mise en oeuvre de l'invention

Comme illustré en figure 4, les conversions numériques analogiques se font alors à des instants tᵢ précis, la conversion étant synchronisée avec un événement provenant du timer (ou d'une autre source de synchronisation) et non, comme dans l'art antérieur, de l'unité centrale, qui elle décale ses instructions en fonction des interruptions.

Dans un autre mode de mise en oeuvre, le signal de synchronisation provient d'une interruption à un temps préprogrammé, correspondant à la sortie d'une comparaison. On programme dans un registre de comparaison la valeur t₁ et dans les registres tampon R_{T} 321 et 322 de conversion F(t₁). Lors de l'interruption correspondant à t₁ on programme dans le registre de comparaison la valeur t₂ et dans les registres tampon R_{T} 321 et 322 de conversion F(t₂). Lors de l'interruption correspondant à tᵢ₋₁, on programme dans le registre de comparaison la valeur tᵢ et dans les registres tampon R_{T} 321 et 322 de conversion F(tᵢ), où i est un entier relatif. On synthétise ainsi une forme d'onde F(tᵢ).

Il est bien entendu que l'invention ne se limite pas aux signaux de synchronisation internes au microcontrôleur, et que les sources de synchronisation 36 peuvent aussi bien être internes au microcontrôleur, qu'externes.

L'invention permet donc de s'affranchir des incertitudes sur les instants de conversion dues à l'activité temps réel du microcontrôleur et de générer une forme d'onde analogique présentant moins de distorsion.

### 6.3.4 Exemple détaillé

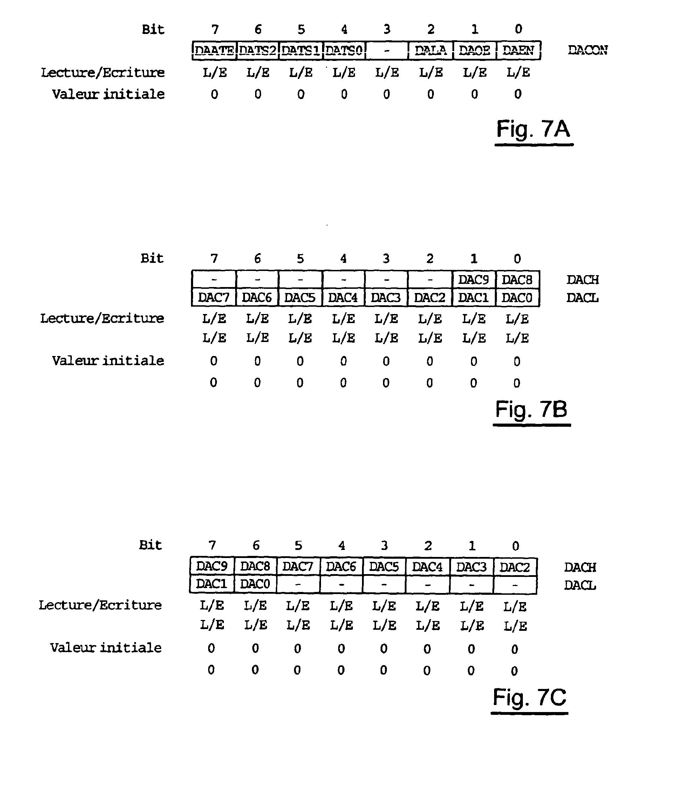

On présente en relation avec la figure 5 un exemple d'un convertisseur numérique analogique selon un mode de réalisation particulier de l'invention. Pour plus de détails, on pourra se référer au schéma complet d'un tel CNA, présenté en figure 6, 7A, 7B et 7C et décrit en annexe.

Dans ce mode de réalisation particulier, la synchronisation du CNA est mise en oeuvre dans un microcontrôleur 8 bits de type AVR (marque détenue par le titulaire de la présente demande de brevet). Ce type de microcontrôleur peut notamment être utilisé dans les systèmes d'éclairage.

L'unité centrale d'un tel microcontrôleur délivre des données sous la forme de mots de 8 bits, alors que le CNA traite des mots de 10 bits dans ce mode de réalisation. Par conséquent on choisit d'implémenter le registre R et le registre tampon R_{T} sur deux registres de 8 bits.

Ces deux paires de registres servent à la fois pour assurer l'élargissement du bus de données de 8 à 10 bits et la fonction de synchronisation.

Le registre R étant directement relié au CNA, il va falloir mettre en forme le contenu du registre R, implémenté sur deux registres de 8 bits, le registre DACSH et le registre DACSL, pour former un mot de 10 bits entrant sur le CNA.

De manière préférentielle, pour mettre en forme le contenu du registre R, on choisit :
- soit de garder les 10 bits de poids fort du registre R, correspondant aux 8 bits du registre DACSH et aux 2 premiers bits du registre DACSL, pour former un mot « DAC High bits » de 10 bits ;
- soit de garder les 10 bits de poids faible du registre R, correspondant aux 2 derniers bits du registre DACSH et aux 8 bits du registre DACSL pour former un mot « DAC Low bits » de 10 bits ;
la sélection de ces 10 bits parmi 16 bits (deux mots de 8 bits) se faisant de manière combinatoire en sortie des registres DACSH et DACSL.

L'interface du convertisseur numérique analogique comprend cinq registres de 8 bits : le registre DACH et le registre DACL (correspondants au registre tampon R_{T}), le registre DACSH et le registre DACSL (correspondants au registre R) et le registre DACON. En sortie de ce CNA, on obtient une forme d'onde analogique F(t).

Le registre DACON (en anglais « Digital to Analog Conversion Control Register ») est utilisé pour le contrôle de la conversion numérique analogique. Il permet de configurer le CNA en choisissant d'activer ou de désactiver la synchronisation, de sélectionner la source d'interruption (par exemple un signal externe, une sortie de comparaison, ou encore une fin de comptage d'une base de temps externe ou interne,...) ou encore de sélectionner le mot de 10 bits correspondant aux bits de poids fort « DAC High bits » ou aux bits de poids faible « DAC Low bits ».

Un tel CNA peut donc traiter des mots de N bits, même si l'unité centrale délivre des données sous la forme de mots de M bits, où M est inférieur à N, en combinant plusieurs mots de M bits. En particulier, beaucoup d'applications utilisent des mots de 8 bits (M=8).

Cette invention est notamment utile pour toute application devant générer une tension variable avec des contraintes temporelles importantes, comme par exemple une application d'asservissement de position, de contrôle de moteurs électriques, de poste de soudure, d'instrumentation, ou encore d'alimentation.

### ANNEXE

### Fonctionnement :

Le Convertisseur Numérique Analogique présenté en figure 6 (noté « DAC » pour « Digital Analog Converter ») génère un signal analogique en fonction du contenu des registres d'écriture du DAC.
De manière à avoir une fréquence d'échantillonnage de contrôle précise, il est possible d'actualiser les valeurs en entrée du DAC en tenant compte de différents événements provenant de « déclencheurs », encore appelés « trigger ».

### Registres de contrôle :

Le DAC est contrôlé au moyen de trois registres dédiés :
- le registre DACON (de l'anglais « Digital to Analog Conversion Control Register » pour « registre de conversion numérique analogique »), utilisé pour la configuration du DAC et présenté en figure 7A ;
- les registres DACH et DACL, utilisés pour les données à convertir et présentés en figure 7B et 7C.

### Le registre DACON (figure 7A) :

• **Bit 7 - DAATE (de l'anglais « DAC Auto Trigger Enable bit » pour « bit d'activation de la synchronisation du DAC»)**
Mettre ce bit à '1' pour actualiser la valeur d'entrée du DAC sur un front montant du trigger, encore appelé signal de synchronisation, sélectionné à partir des bits DATS2, DATS1, DATS0 du registre DACON.
Le laisser à '0' pour actualiser automatiquement l'entrée du DAC lorsqu'une valeur est écrite dans le registre DACH.
• **Bit 6:4 - DATS2, DATS1, DATS0 (de l'anglais « DAC Trigger Selection bits » pour « bits de sélection de la source de synchronisation »)**
Ces bits ne sont nécessaires que dans le cas où le DAC travaille en mode « auto trigger », c'est-à-dire quand le bit DAATE est utilisé.
Conformément au tableau 1, les trois bits DATS2:0 permettent de sélectionner l'interruption qui génèrera l'actualisation des valeurs d'entrée du DAC. La mise à jour sera déclenchée par un front montant dans un signal d'interruption sélectionné, que l'interruption soit autorisée ou non.

**Tableau 1 :**

| **Sélection de l'événement déclencheur (DAC Auto Trigger source)** | | | |
|---|---|---|---|
| **DATS2** | **DATS1** | **DATS0** | **Description** |
| 0 | 0 | 0 | Comparateur analogique 0 |
| 0 | 0 | 1 | Comparateur analogique 1 |
| 0 | 1 | 0 | Demande d'interruption externe 0 |
| 0 | 1 | 1 | Comparaison Temporisateur/Compteur 0, valeur A |
| 1 | 0 | 0 | Temporisateur/Compteur 0, dépassement |
| 1 | 0 | 1 | Comparaison Temporisateur/Compteur 0, valeur B |
| 1 | 1 | 0 | Temporisateur/Compteur 1, dépassement |
| 1 | 1 | 1 | Temporisateur/Compteur 1, événement de capture |

• **Bit 2 - DALA (de l'anglais « Digital to Analog Left Adjust » pour « ajustement par la gauche pour la conversion »)**
Mettre ce bit à '1' pour écrire les données à entrer dans le DAC par la gauche.
Le mettre à '0' pour écrire les données par la droite.
Le bit DALA a une incidence sur la configuration des registres d'écriture du DAC. Lorsque l'on modifie la valeur de ce bit, on modifie la sortie du DAC à la prochaine écriture dans le registre DACH.
• **Bit 1 - DAOE (de l'anglais « Digital to Analog Output Enable bit » pour « bit d'activation de sortie »)**
Mettre ce bit à '1' pour sortir le résultat de la conversion sur la broche externe « DA Pin », le laisser à '0' pour conserver le résultat à l'intérieur du DAC.
**• Bit 0 - DAEN (de l'anglais « Digital to Analog Enable bit » pour « bit d'activation »)**
Mettre ce bit à '1' pour activer le convertisseur numérique analogique. Le mettre à '0' pour le désactiver.

### Les registres d'entrée du convertisseur: DACH et DACL

Les registres DACH et DACL contiennent la valeur à convertir. L'écriture dans DACL interdit la mise à jour de la valeur à convertir tant que le registre DACL n'a pas été actualisé. Ainsi, le moyen normal d'écrire une valeur à convertir est d'écrire d'abord DACL et ensuite DACH.
Pour travailler facilement avec des mots de 8 bits, il est possible d'ajuster par la gauche la valeur d'entrée. Ainsi il suffit d'écrire dans le registre DACH pour actualiser la valeur du DAC.
Le contenu du registre DACH dépend de la configuration sélectionnée à partir du bit DALA.
Lorsque ce bit DALA est égal à '0', comme illustré en figure 7B, on commence à écrire les données à entrer dans le DAC par la droite. On écrit donc les 8 premiers bits de données dans le registre DACL et les 2 derniers bits dans le registre DACH.
Lorsque ce bit DALA est égal à '1', comme illustré en figure 7C on commence à écrire les données à entrer dans le DAC par la gauche. On écrit donc les 8 premiers bits de données dans le registre DACH et les 2 derniers bits dans le registre DACL.
Pour convertir des mots de 10 bits, le DAC doit actualiser deux registres.
Pour éviter les valeurs intermédiaires, les valeurs d'entrée du DAC qui sont réellement convertie en signal analogique sont mémorisées dans un registre non accessible par programme, non représenté (correspondant aux registres DACSH et DACSL de la figure 5). En mode normal, la valeur à convertir est actualisée à l'écriture du registre DACH.
Dans le cas où le bit DAATE est mis à '1', les valeurs d'entrée du DAC seront actualisées à l'événement sur le trigger, sélectionné à partir des bits DATS2:0, suivant immédiatement l'écriture du registre DACH.
Dans le cas où le bit DAATE du registre DACON est mis à '0', le DAC est dans un mode d'actualisation automatique. Ecrire dans le registre DACH actualise automatiquement les valeurs d'entrée du DAC avec le contenu des registres DACH et DACL.
Cela signifie que changer le contenu du registre DACL n'a aucun effet sur la sortie du DAC tant que le registre DACH n'est pas actualisé.
Ainsi, pour travailler avec des mots de 10 bits, on doit écrire d'abord dans le registre DACL avant d'écrire dans le registre DACH. En travaillant avec des mots de 8 bits, l'écriture de DACH entraîne la mise à jour du DAC.

## Revendications

1. Microcontrôleur comprenant une unité centrale (11), au moins un convertisseur numérique analogique (13), périphérique de ladite unité centrale, et un registre tampon (32 ; 321, 322) situé entre ladite unité centrale et ledit convertisseur, recevant de ladite unité centrale des données et une première commande de transfert desdites données,
**caractérisé en ce qu'**il comprend des moyens de synchronisation dudit convertisseur comprenant un registre (33) interposé entre ledit registre tampon et ledit convertisseur, ledit registre interposé (33) recevant une deuxième commande de transfert desdites données indépendante de ladite unité centrale, ladite seconde commande provenant d'un bloc de synchronisation (35) dudit registre interposé.

2. Microcontrôleur selon la revendication 1, **caractérisé en ce que** ladite deuxième commande de transfert est une interruption matérielle.

3. Microcontrôleur selon la revendication 2, **caractérisé en ce que** ladite interruption matérielle est générée par au moins un temporisateur (en anglais « timer ») interne audit microcontrôleur.

4. Microcontrôleur selon l'une quelconque des revendications 2 et 3,
**caractérisé en ce que** ladite interruption matérielle correspond à :
- une fin de comptage d'une base de temps ;
- une sortie de comparaison à un temps préprogrammé ;
- un signal externe associé à la capture du temps interne ;
- un signal externe générant une interruption logicielle.

5. Microcontrôleur selon l'une quelconque des revendications 1 à 4,
**caractérisé en ce que** lesdits moyens de synchronisation comprennent également ledit bloc de synchronisation (35) dudit registre alimenté par au moins un signal de synchronisation et ladite première commande de transfert.

6. Microcontrôleur selon l'une quelconque des revendications 1 à 5,
**caractérisé en ce que** ledit convertisseur numérique analogique (34) traite des mots de N bits, **en ce que** l'unité centrale délivre lesdites données sous la forme de mots de M bits, M<N, et **en ce que** ledit microcontrôleur comprend des moyens de mise en forme d'un mot de N bits à partir de deux mots de M bits.

7. Microcontrôleur selon la revendication 6, **caractérisé en ce que** lesdits moyens de mise en forme comprennent des moyens pour extraire un mot de N bits à partir de deux mots de M bits, en sélectionnant soit les N bits de poids fort, soit les N bits de poids faible.

8. Microcontrôleur selon l'une quelconque des revendications 6 et 7, **caractérisé en ce que** M=8 et N=10.

9. Microcontrôleur selon l'une quelconque des revendications 1 à 8, **caractérisé en ce que** ledit convertisseur (34) génère une forme d'onde prédéterminée.

10. Microcontrôleur selon l'une quelconque des revendications 1 à 9, **caractérisé en ce que** ledit convertisseur (34) délivre un signal analogique à au moins un des éléments appartenant au groupe comprenant :
- les automates industriels;
- les alimentations;
- les ballasts ;
- les appareils électroménagers;
- les dispositifs d'asservissement de position ;
- les moyens de contrôle de moteurs électriques.

## Claims

1. Microcontroller comprising a control unit (11), at least one digital to analog converter (DAC 13) as a peripheral of the said control unit, and a buffer register (32; 321, 322) located between the said control unit and the said converter, receiving from the said control unit data and a first command to transfer the said data,
**characterised in that** it comprises means of synchronisation of the said converter including a register (33) inserted between the said buffer register and the said converter, called interposed register, the said interposed register receiving a second transfer command to transfer said data independent of the said control unit, said second command being issued from a block of synchronisation (35) for said interposed register.

2. Microcontroller according to claim 1, **characterised in that** the said second transfer command is a hardware interrupt.

3. Microcontroller according to claim 2, **characterised in that** the said hardware interrupt is generated by at least one timer internal to the microcontroller.

4. Microcontroller according to any one of claims 2 and 3, **characterised in that** the said hardware interrupt corresponds to:
- end of counting of a time base;
- an exit from a comparison at a pre-programmed time;
- an external signal associated with collection of the internal time;
- an external signal generating a software interrupt.

5. Microcontroller according to any one of claims 1 to 4, **characterised in that** the said synchronisation means also include the synchronisation block (35) of said register into which at least one synchronisation signal and the said first transfer command are input.

6. Microcontroller according to any one of claims 1 to 5, **characterised in that** the said digital to analog converter (34) processes N-bit words, and the control unit outputs the said data in the form of M-bit words, where M < N,
and **in that** the said microcontroller comprises means for formatting an N-bit word from two M-bit words.

7. Microcontroller according to claim 6, **characterised in that** the said formatting means comprise means for extracting an N-bit word from two M-bit words, selecting either the N most significant bits, or the N least significant bits.

8. Microcontroller according to any one of claims 6 and 7, **characterised in that** M = 8 and N = 10.

9. Microcontroller according to any one of claims 1 to 8, **characterised in that** the said converter (34) generates a predetermined wave shape.

10. Microcontroller according to any one of claims 1 to 9, **characterised in that** the said converter (34) outputs an analog signal to at least one of the elements belonging to the group containing:
- industrial logic controllers;
- power supplies;
- ballasts;
- household appliances;
- position slaving devices;
- electric motor control means.

## Patentansprüche

1. Mikrocontroller, der eine Zentraleinheit (11), mindestens einen Digital-Analog-Wandler (13), der ein Peripheriegerät der Zentraleinheit ist, sowie ein Pufferregister (32; 321, 322) aufweist, das sich zwischen der Zentraleinheit und dem Wandler befindet und von der Zentraleinheit Daten und einen ersten Befehl zum Übertragen der Daten empfängt,
**dadurch gekennzeichnet, dass** der Mikrocontroller Mittel zur Synchronisation des Wandlers aufweist, die ein Register (33) aufweisen, das zwischen dem Pufferregister und dem Wandler eingefügt ist, wobei das eingefügte Register (33) einen zweiten unabhängig Befehl zum Übertragen der Daten von der Zentraleinheit empfängt, wobei der zweite Befehl von einem Synchronisationsblock (35) des eingefügten Registers stammt.

2. Mikrocontroller nach Anspruch 1, **dadurch gekennzeichnet, dass** der zweite Übertragungsbefehl eine Hardware-Unterbrechung ist.

3. Mikrocontroller nach Anspruch 2, **dadurch gekennzeichnet, dass** die Hardware-Unterbrechung von mindestens einem Verzögerer (im Angelsächsischen "Timer") innerhalb des Mikrocontrollers erzeugt wird.

4. Mikrocontroller nach einem der Ansprüche 2 und 3, **dadurch gekennzeichnet, dass** die Hardware-Unterbrechung Folgendem entspricht:
- einem Zählende einer Zeitbasis,
- einem Ausgang zum Vergleichen mit einer vorprogrammierten Zeit,
- einem externen Signal, das mit dem Erfassen der internen Zeit verbunden ist,
- einem externen Signal, das eine Software-Unterbrechung erzeugt.

5. Mikrocontroller nach einem der Ansprüche 1 bis 4, **dadurch gekennzeichnet, dass** die Synchronisationsmittel auch den Synchronisationsblock (35) des Registers aufweisen, der von mindestens einem Synchronisationssignal und von dem ersten Übertragungsbefehl versorgt wird.

6. Mikrocontroller nach einem der Ansprüche 1 bis 5, **dadurch gekennzeichnet, dass** der Digital-Analog-Wandler (34) Wörter zu N Bits verarbeitet, und dass die Zentraleinheit die Daten in Form von Wörtern zu M Bits liefert, wobei M<N,
und dass der Mikrocontroller Mittel zum Formen eines Worts zu N Bits ausgehend von zwei Wörtern zu M Bits aufweist.

7. Mikrocontroller nach Anspruch 6, **dadurch gekennzeichnet, dass** die Mittel zum Formen Mittel zum Extrahieren eines Worts zu N Bits ausgehend von zwei Wörtern zu M Bits durch Auswählen entweder der N höherwertigen Bits oder der N niedrigwertigen Bits aufweisen.

8. Mikrocontroller nach einem der Ansprüche 6 und 7, **dadurch gekennzeichnet, dass** M=8 und N=10.

9. Mikrocontroller nach einem der Ansprüche 1 bis 8, **dadurch gekennzeichnet, dass** der Wandler (34) eine vorbestimmte Wellenform erzeugt.

10. Mikrocontroller nach einem der Ansprüche 1 bis 9, **dadurch gekennzeichnet, dass** der Wandler (34) ein analoges Signal zu mindestens einem der Elemente liefert, die zu der folgenden Gruppe gehören:
- Industrieautomaten,
- Netzteile,
- Vorschaltgeräte,
- Elektro-Haushaltsgeräte,
- Positionssteuervorrichtungen,
- Steuermittel für Elektromotoren.
